# EUROPEAN PATENT APPLICATION

(11) **EP 2 333 707 A1**
(43) Date of publication of application: **15.06.2011**
(21) Application number: 10194097.1
(22) Date of filing: 08.12.2010
(51) Int. Cl.: G06Q 10/00

(54) **Method and apparatus for providing electronic phonebook**

(30) Priority: 08.12.2009 KR 20090121312
(71) Applicant: SAMSUNG ELECTRONICS CO., LTD., Suwon-si, Gyeonggi-do (KR)
(72) Inventor: Jeon, Jae Choon, Suwon-si, Gyeonggi-do (KR); Kim, Bum Soo, Suwon-si, Gyeonggi-do (KR)
(74) Representative: van Westenbrugge, Andries

(57) **Abstract**

A method for providing a phonebook in a mobile terminal and a mobile terminal for performing the method are provided. The method for providing a phonebook in the mobile terminal includes displaying a phonebook list, searching, if a phonebook entry is selected from the phonebook entry list, for linkage information representing a specific phonebook entry, building a relationship diagram based on the linkage information, and displaying the relationship diagram graphically.

## Description

### BACKGROUND OF THE INVENTION

### 1. Field of the Invention:

The present invention relates to a mobile terminal. More particularly, the present invention relates to a phonebook provision method and apparatus for a mobile terminal that is capable of providing relationship information among the phonebook entries grouped based on a shared property in a relationship diagram.

### 2. Description of the Related Art:

With the advancements in electronic technologies, there is an increasing demand for various functionalities for mobile terminals. Recent mobile terminals support a plurality of supplementary functions, such as a camera function and a digital broadcast playback function, as well as communication functions including voice and video communication and text messaging functions.

Meanwhile, a phonebook application is one of the most frequently used applications for making voice and video calls and sending text messages conveniently. The phonebook includes a plurality of entries, each of which comprising a plurality of fields including a name field and at least one of a contact field, a nickname field, an email address field, and an address field that are provided in response to the user's request. With the use of the phonebook, the user no longer needs to remember phone numbers and the contact information.

However, the conventional phonebook is rather inconvenient to use due to its inflexibility in information input and entry group management. Since the conventional phonebook allows for the accessing and searching of the stored information entry by entry with simple query, it is difficult for the user to be intuitively aware of the relationship among the related phonebook entries, thereby resulting in ignorance of useful information.

### SUMMARY OF THE INVENTION

An aspect of the present invention is to address the at least above-mentioned problems and/or disadvantages and to provide at least the advantages described below. Accordingly, an aspect of the present invention is to provide a method and apparatus for providing electronic phonebook in a mobile terminal that is capable of providing a user's intended information intuitively and improving user convenience and accessibility.

Another aspect of the present invention is to provide a method and apparatus for providing electronic phonebook in a mobile terminal that is capable of proving user-intended contact information in the form of a user-specific relationship diagram that shows the entries linked on the basis of linkage information.

Yet another aspect of the present invention is to provide a method and apparatus for providing user-intended phonebook in a mobile terminal that is capable of providing contact information in the form of a user-specific relationship diagram such as family tree and organization chart.

In accordance with an aspect of the present invention, a method for providing a phonebook in a mobile terminal is provided. The method includes displaying a phonebook list, searching, if a phonebook entry is selected from the phonebook list, for linkage information representing a specific phonebook entry, building a relationship diagram based on the linkage information, and displaying the relationship diagram graphically.

In accordance with another aspect of the present invention, a mobile terminal is provided. The mobile terminal includes a display unit for displaying at least one of a phonebook list of phonebook entries and a relationship diagram of a group of phonebook entries, a storage unit for storing at least one phonebook entry and linkage information associated with the at least one phonebook entry, and a control unit for building, if a phonebook entry is selected from the phonebook list, the relationship diagram based on the linkage information associated with the selected phonebook entry and for displaying the relationship diagram.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of the certain exemplary embodiments of the present invention will be more apparent from the following description taken in conjunction with the accompanying drawings, in which:

FIG. 1 is a block diagram illustrating a configuration of a mobile terminal according to an exemplary embodiment of the present invention;

FIG. 2 is a diagram illustrating screen images for explaining steps of a phonebook entry information provision procedure of a phonebook provision method according to an exemplary embodiment of the present invention;

FIG. 3 is a diagram illustrating screen images for explaining steps of a phonebook entry relationship configuration procedure of a phonebook provision method according to an exemplary embodiment of the present invention; and

FIG. 4 is a flowchart illustrating a method for providing a phonebook in a mobile terminal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Exemplary embodiments of the present invention include a phonebook provision method and apparatus for a mobile terminal. The phonebook provision method and apparatus of the exemplary embodiments of the present invention are capable of providing phonebook entry information in the form of a relationship diagram (e.g., family tree or organization chart) having the phone entries linked on the basis of a specific relationship. According to an exemplary embodiment of the present invention, the relationship diagram can be created based on one of various types of relationships that are configured by the user. The relationship diagram created on the basis of a specific relationship can provide the user with intuitive and intelligent information.

A description is made of a configuration of a mobile terminal for providing phonebook entry information according to an exemplary embodiment of the present invention. The configuration of the mobile terminal is not limited to the following description, but can be implemented with various modifications in other exemplary embodiments.

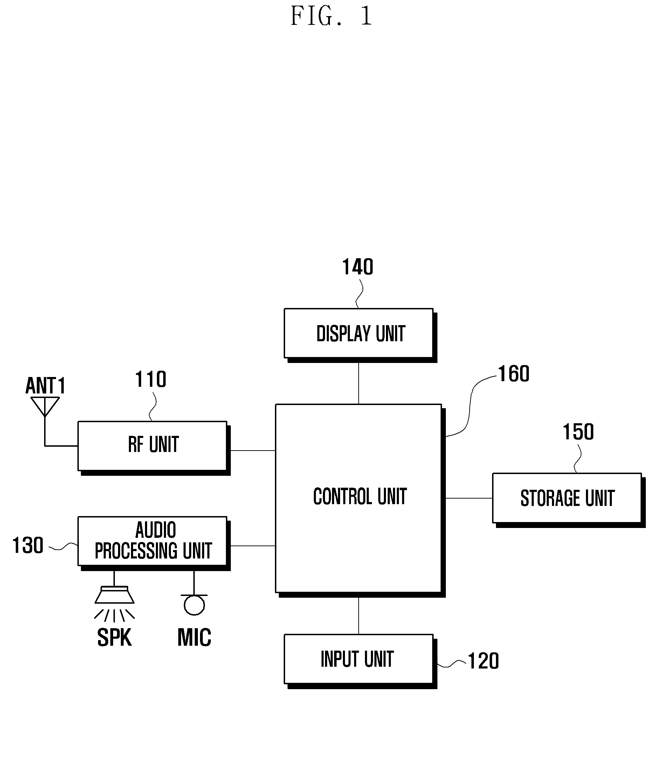

FIG. 1 is a block diagram illustrating a configuration of a mobile terminal according to an exemplary embodiment of the present invention.

Referring to FIG. 1, the mobile terminal includes a Radio Frequency (RF) unit 110, an input unit 120, an audio processing unit 130, a display unit 140, a storage unit 150, and a control unit 160. The audio processing unit 130 can include a speaker (SPK) and a microphone (MIC). Descriptions are made of the individual function blocks hereinafter.

The RF unit 110 is responsible for the radio communication of the mobile terminal. The RF unit 110 establishes a communication channel with a network (i.e., a base station) supported by the mobile terminal to communicate radio signals carrying application data such as voice and video call data, messaging service data, and Internet access service data. The RF unit 110 can include a transceiver for up-converting and amplifying transmission signals and low-noise-amplifying and down-converting received signals.

Here, the communication channel can be a cellular channel of a cellular system such as Code Division Multiple Access (CDMA), Time Division Multiple Access (TDMA), Orthogonal Frequency Division Multiple Access (OFDMA) or an Internet Protocol (IP) channel of an IP network, such as wired IP network and wireless IP network. In a case where the Internet-based communication is supported, the RF unit 110 can include an Internet communication module (not shown).

The input unit 120 is provided with a plurality of alphanumeric keys and function keys and transfers the input signal corresponding to the key input to the control unit 160. The function keys can include navigation keys, side keys, and shortcut keys (e.g., phonebook function activation key). The input unit 120 can be implemented with at least one of a touchpad, a touchscreen, a normal keypad (i.e., a 3x4 or a 4x3 keypad), and a QWERTY keypad. More particularly, in an exemplary embodiment of the present invention, the input unit 120 generates an input signal for configuring phonebook entry information and entry relationship information and sends the input signal to the control unit 160. The input signal can be generated in response to a key stroke made on the keypad or a touch made on the touchscreen of the input unit 120.

The audio processing unit 130 can include the speaker (SPK) for playing the audio of the mobile terminal and the microphone (MIC) for collecting audio signal including voice. The audio processing unit 130 is connected to the microphone (MIC) and the speaker (SPK) and outputs the audio signal to the control unit 160 in the form of audio data and outputs the audio signal provided by the control unit 160 through the speaker (SPK) in the form of an audible sound wave. The audio processing unit 130 can output various audio components generated in the mobile terminal selectively according to the user's intention. The audio components can include the audio sound produced from the audio data and sound effect alarming the activation of phonebook.

The display unit 140 displays various screen images produced in association with the activation of functions of the mobile terminal. For example, the display unit 140 can display a booting progressing screen, an idle mode screen, a menu screen, a list screen, a call progressing screen, an application execution screen, and a phonebook screen. That is, the display unit 140 can display various screens related to the conditions and operations of the mobile terminal. The display unit 140 may be implemented with one of a Liquid Crystal Display (LCD), a Plasma Display Panel (PDP), a Light Emitting Diode (LED), an Organic LED (OLED), and an Active Matrix OLED (AMOLED). The display unit 140 can be implemented with a touchscreen. In this case, the display unit 140 can work as both the input and output devices. In case that the display unit 140 is touchscreen-enabled, the input unit 120 can be omitted depending on the design of the mobile terminal. The display unit 140 can display a phonebook screen, a relationship diagram screen, and a linkage information configuration screen. The display unit 140 provides the relationship diagram produced based on the linkage information as a Graphic User Interface (GUI).

The storage unit 150 stores various types of data generated and utilized in the mobile terminal. The data can be the data created in the mobile terminal, received from outside (e.g., another mobile terminal, a web server, and a personal computer). The data can include phonebook data (i.e., phonebook entry information), video data, audio data, broadcast data, picture data, message data, document data, image data, etc. The data also can include application data related to the functions supported by the mobile terminal. More particularly in an exemplary embodiment of the present invention, the storage unit 150 stores the software related to the phonebook provision function using linkage information.

The storage unit 150 can store the linkage information including group information and relationship information corresponding to the phone entry information. The linkage information includes the relationship information defining the relationship between the user and the group to which specific entry belongs. For example, the linkage information can include the group information defining a group "family" to which a specific entry belongs and the relation information defining the relation "brother" of the specific entry to the user. The relation information can be subcategorized in the form of relation/detailed relation as "brother/younger". Accordingly, the storage unit 150 may store the linkage information in the form of "family-younger brother" or "family-brother-younger".

The storage unit 150 can include at least one buffer for buffering the data generated while a function of the mobile terminal is executed. For example, when the control unit 160 is configuring a relationship diagram, the storage unit 150 can buffer the data related to the configuration of a relationship diagram. The storage unit 150 can be implemented using at least one of an internal memory and a detachable smartcard. The storage unit 150 can include at least one of a Random Access Memory (RAM), a Read Only Memory (ROM), and a Flash memory. More particularly, the storage unit 150 can be implemented with one of the RAM, ROM, and Flash memory or combination of more than two different types of memory, e.g., a Multi Chip Package (MCP) memory.

The control unit 160 controls entire functions of the mobile terminal and signaling among the internal function blocks. The control unit 160 controls signaling among the RF unit 110, the input unit 120, the audio processing unit 130, the display unit 140, and the storage unit 150.

The control unit 160 controls the operations related to the phonebook function of exemplary embodiments of the present invention. The control unit 160 builds a relationship diagram based on the linkage information when the phonebook function is activated and displays the relationship diagram as a GUI screen. Exemplary GUI screens are described further below. When building a relationship diagram, the control unit 160 extracts linkage information corresponding to the phonebook entry information. The control unit 160 controls to configure the relationship diagram based on the group information, relationship information, detailed relationship information, and supplementary information included in the linkage information.

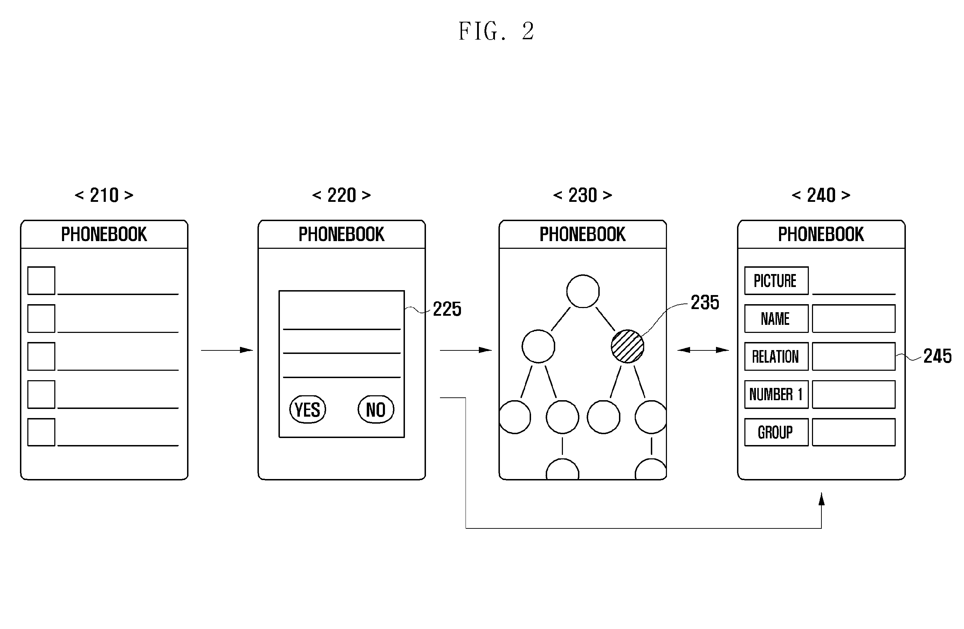

The control unit 160 may control the entire operations related to the procedure for providing the phonebook as described above with reference to FIG. 1 and described below with reference to FIGs. 2 to 4. The control operations of the control unit 160 can be implemented with software with a predefined algorithm for controlling the corresponding functions that is executed by a controller or processor.

Although depicted schematically in FIG. 1 for simplicity in explanation, the mobile terminal is not limited to the configuration of FIG. 1. The control unit 160 can be provided with a baseband module for supporting a cellular communication service. Although not depicted in FIG. 1, the mobile terminal according to an exemplary embodiment of the present invention can further include at least one of a projector module for providing a projector function, a Global Positioning System (GPS) module for receiving location information, a camera module for taking still/motion picture of a subject, a Bluetooth module for supporting Bluetooth communication, communication interfaces for wired and wireless data communications, an Internet access module for supporting Internet access, a digital broadcast module for receiving and playing digital broadcast data, and other functional modules that are not depicted in FIG. 1. The mobile terminal can be any of a mobile device having a small-size display and a large display device, and various types of information processing devices, multimedia devices, and their equivalents. In addition, the mobile terminal can be any of a mobile communication operating with one of various communication protocols, a Portable Multimedia Player (PMP), a digital broadcast player, a Personal Digital Assistant (PDA), a music player (e.g., an MP3 player), a portable game console, a Smartphone, and a tablet Personal Computer (PC). Also, the mobile terminal can be any of a TeleVision (TV), a Large Format Display (LFD), a Digital Signage (DS), a media pole, a PC, a laptop computer having a display device. The display device can be any of LCD, PDP, LED, OLED, and AMOLED.

The configuration of the mobile terminal according to an exemplary embodiment of the present invention has been described hereinabove. A method for providing the phonebook in the above structured mobile terminal is described below with reference to FIGs. 2 to 4. The present invention is not limited to the following description on the operation and control method of exemplary embodiments of the present invention but can be implemented with various modifications in other exemplary embodiments.

FIG. 2 is a diagram illustrating screen images for explaining steps of a phonebook entry information provision procedure of a phonebook provision method according to an exemplary embodiment of the present invention.

Referring to FIG. 2, the control unit 160 of the mobile terminal initially displays a phonebook list screen 210 in response to a user request. In more detail, the control unit 160 executes the phonebook application in response to a phonebook request signal input in the form of a touch made on the touchscreen or a key stroke made on a keypad of the input unit 120 and displays a phonebook execution screen (e.g., a phonebook list) by means of the display unit 140.

In a case where the mobile terminal includes the software and configuration for supporting a motion sensing function for sensing user's gesture and speech recognition function for recognizing user's voice command, the control unit 160 can control the execution of the phonebook application and display of the execution screen in response to a specific gesture or voice command. For example, the control unit 160 can be configured to recognize a voice command "phonebook" for executing the phonebook application or a gesture command such as tilt of the mobile terminal in a predefined direction and to display the execution screen in response to the voice or gesture command.

Next, if a phonebook entry is selected on the phonebook list screen 210, the control unit 160 of the mobile terminal controls such that a popup window 225 is displayed as denoted by reference number 220. The phonebook entry selection can be done by stroking a key on the input unit 120 or by performing a touch on the touchscreen.

If a phonebook entry selection input is detected while the phonebook list screen 210 is displayed, the control unit 160 of the mobile terminal controls such that the popup window 225 is displayed that asks whether to display the phonebook entry information in relationship information format or normal information format. For example, the control unit 160 can control the display unit 140 to display the popup window 225 presenting a message "display relationship information?" with items for user selection.

The popup window display step can be skipped such that the relationship information screen 230 and the entry information screen 240 to be described later are displayed directly. That is, in a case where the mobile terminal is configured such that the relationship information is provided in response to the user's confirmation, the control unit 160 of the mobile terminal controls to display the popup window 225. In a case where the mobile terminal is configured such that the relationship information is provided without the user's confirmation, the relationship information screen 230 may be displayed by skipping the presentation of the popup window 225. In a case where the mobile terminal is configured such that the normal entry information is displayed, the normal entry information screen 240 is displayed by skipping the presentation of the popup window 225.

In a case where the mobile terminal is configured such that the popup window 225 is presented as shown in the screen image 220, the user can decide whether to display the relationship information or the normal information. For example, the user can select a "yes" option item in the popup window 225 that presents the message "display relationship information?" to request that the relationship information be shown or a "no" option item to request the normal information.

Once a user input is detected on the popup window 225, the control unit 160 of the mobile terminal can identify the command corresponding to the user input. That is, the control unit 160 identifies whether the user input is the selection of the "yes" option item or the "no" option item. If it is determined that the user has selected the "yes" option item, the control unit 160 controls such that the relationship information screen 230 is displayed. Otherwise, if it is determined that the user has selected the "no" option item, the control unit 160 controls such that the normal entry information screen is displayed.

When displaying the relationship information screen 230, the control unit 160 can extract linkage information set with specific phonebook entry information. The control unit 160 also can build a user-specific relationship diagram by referencing the linkage information. The control unit 160 may control such that the relationship diagram is presented as shown in the screen image 230. The linkage information can include the group information to which a specific phonebook entry belongs and relationship information defining a relation of the phonebook entry to the user. For example, the user can define the group to which the phonebook entry belongs as "family" and the relation of the phonebook entry to the user as "younger brother". Also, the user can define the group as "company" and the relation of the phonebook entry to the user as "section chief'.

While displaying the relationship information screen 230, the control unit 160 extracts the group information and the relationship information based on the linkage information corresponding to the specific phonebook entry information. The control unit 160 also can extract information on the other phonebook entries belonging to the same group on the basis of the extracted group information and relation information. The control unit 160 can build a relationship diagram (e.g., a family tree and organization chart) based on the group information, relationship information, and other phonebook entries information. The relationship diagram can be presented as shown in the relationship information screen 230. The relationship information screen 230 shows an example of the family tree.

When displaying the relationship information screen 230, the control unit 160 of the mobile terminal can control such that the object corresponding to the phonebook entry selected from the phonebook list screen 210 is highlighted to be distinguished from the objects corresponding to other phonebook entries. Reference number 235 shows an object highlighted to indicate the phonebook entry selected by the user. The object corresponding to the phonebook entry selected by the user in the phonebook list screen 210 can be presented with various visual effects such that user can identify the position of the phonebook entry in the relationship diagram intuitively.

The control unit 160 of the mobile terminal can control such that the normal phonebook entry information is displayed as shown in the normal entry information screen 240 according to user selection or preset configuration. The user selection may be to select the "no" option item on the screen 220 or to select an object presented on the relationship information screen 230. The control unit 160 also can control such that the simple relationship information 245 indicating the relationship of the corresponding phonebook entry to the user is provided in the normal entry information screen 240.

As described above, the control unit 160 of the mobile terminal can provide the information on the phonebook entry selected by the user in the form of a relationship diagram which shows the relations among phonebook entries contained in the same group to which the selected phonebook belongs or in the form of a normal entry information showing details. As a consequence, the phonebook provision method and apparatus of an exemplary embodiment of the present invention is capable of providing the user with enhanced phonebook entry information showing relationship among the phonebook entries intuitively, resulting in an improvement of user's convenience.

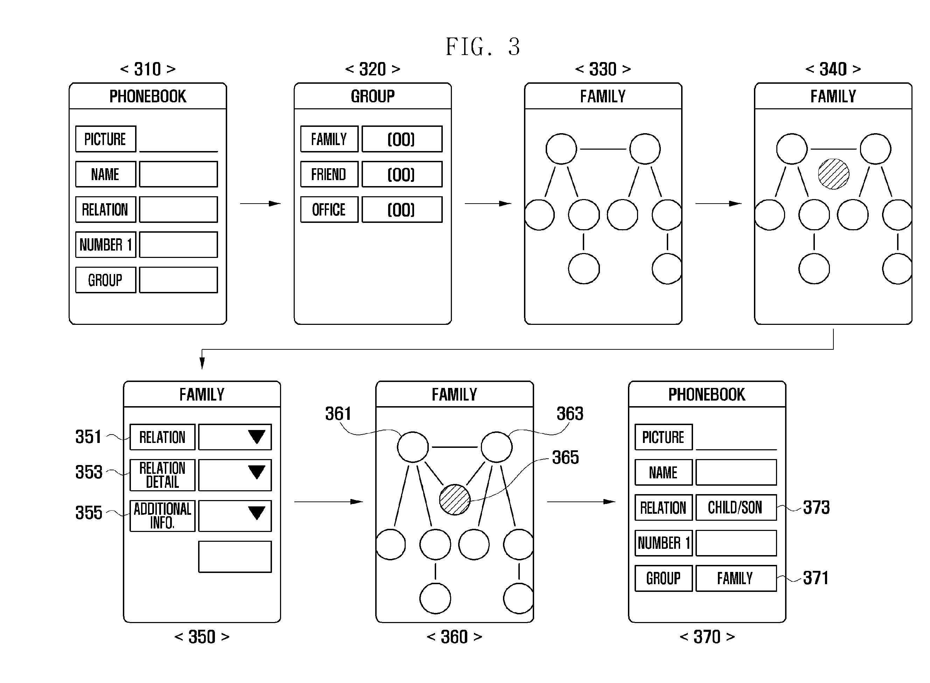

FIG. 3 is a diagram illustrating screen images for explaining steps of a phonebook entry relationship configuration procedure of a phonebook provision method according to an exemplary embodiment of the present invention.

Referring to FIG. 3, the control unit 160 of the mobile terminal can control such that a phonebook entry configuration screen 310 is displayed in response to a user's request. In an exemplary embodiment of the present invention, the phonebook entry configuration screen 310 is provided with one or more of a picture field for a photo or an image of a person corresponding to the phonebook entry, a name field for the name or nickname of the person, a relation field for the relation of the person to the user (i.e., mobile terminal owner), a call number field for at least one phone number of the person, and a group field for the group to which the person belongs. More particularly, in an exemplary embodiment of the present invention, the relation field can be used to add the entry information of a person to a present relationship diagram.

For example, the user can input a command to select the relation field on the phonebook entry configuration screen 310. The user command can be input by performing a touch to the relation filed on the touchscreen or by pushing a key designated for selecting the relation field. After filling the picture field, name field, and group field, the relation field can be set on the phonebook entry configuration screen 310.

If a command for selecting the relation field is input, the control unit 160 of the mobile terminal controls such that a relationship configuration screen 320 is displayed. The relationship configuration screen 320 can be designed to be displayed in response to the selection of the relation field on the phonebook entry configuration screen 310 and to provide a user interface for configuring the group information of the linkage information. As shown in FIG. 3, the relationship configuration screen 320 can be provided with the group items such as "family", "friend", and "company" related to the person represented by the phonebook entry. Each group can be displayed along with a number of member entries of the group. Although not depicted in the relationship configuration screen 320, an option item or a menu item for creating a new group can be provided.

On the relationship configuration screen 320, the user can select one of the group items. The group item selection can be done by performing a touch of one of the group items on the touchscreen or by stroking a key designated for selecting the corresponding group item. In FIG. 3, it is assumed that the "family" group item is selected on the relationship configuration screen 320.

If the "family" group item is selected on the relationship configuration screen 320, the control unit 160 of the mobile terminal retrieves the entry information of the entries belonging to the "family" group. If there is no phonebook entry in the selected group, i.e., "family" group, the control unit 160 controls such that a group-specific member configuration screen is displayed. The group-specific member configuration screen may be displayed without any member entry.

If there is at least one phonebook entry in the selected group, the control unit 160 controls such that a relationship diagram screen 330 is displayed. The relationship diagram screen 330 presents a relationship diagram (e.g., a family tree) built with reference to the linkage information corresponding the phonebook entry information of the at least one phonebook entry. That is, the control unit 160 controls such that a previously configured family tree is displayed in the form of a user interface screen. The relationship diagram screen 330 can be configured to have at least one object corresponding to at least one phonebook entry.

In a case where the "family" group item is selected on the relationship configuration screen, the control unit 160 of the mobile terminal can retrieve at least one phonebook entry having relationship information set by the user among the phonebook entries belonging to the "family" group. Next, control unit 160 builds the user-specific family tree by referencing the linkage information of the at least one phonebook entries. As a consequence, the relationship diagram screen 330 having the family tree is displayed. The linkage information can include the group information grouping the phonebook entries (e.g., family information) and the relationship information of each phonebook entry.

Here, the control unit 160 can retrieve the relationship information of each phonebook entry and determine the arrangement of the phonebook entries based on the relationship information. The control unit 160 can build the family tree by referencing the arrangement of the phonebook entries. For example, the control unit 160 can identify degrees of kinships among the phonebook entries based on the relationship information and arrange the objects representing the respective phonebook entries constituting the family tree based on the degrees of kinships.

As shown in the relationship diagram screen 330, the family tree composed of the objects representing the phonebook entries as the members of the group "family" provides the user with the relationship among the phonebook entries intuitively. The relationship diagram can be designed in one of a hierarchical structure, a radiant structure, and a circular structure depending on the features of the group. The relationship diagram can be structured automatically based on the relationship information, such as father, mother, brother (elder brother, elder sister, younger brother, young sister, etc.), wife, children, etc. that are entered by the user. The control unit 160 can add the additional information such as family founder, pedigree, birth day, anniversary, and schedule to the family tree such that the additional information appears or disappears depending on the user configuration.

The user can add a phonebook entry to the family tree while the relationship diagram screen 330 is displayed. The phonebook entry addition can be requested by performing a touch on the touchscreen or stroking a key on the keypad designated for requesting phonebook entry addition. For example, the user can perform a touch to a specific region of the family tree screen as denoted by reference number 340. Here, the touch can be a tap or a hold event.

If a phonebook entry addition request input is detected while the relationship diagram screen is displayed, the control unit 160 controls such that a relationship creation screen 350 is displayed. The relationship creation screen 350 can be provided with a relation filed 351 for defining the relationship to the user, a relation detail field 353 for describing the relationship, and an addition information field 355 for providing additional information (e.g., family founder, pedigree, birthday, anniversary, and schedule).

The user can select a relationship (e.g., child) of the phonebook entry to the user in the relation field 351. The user also can select a relation detail of the selected relation (e.g., child) in the relation detail field 353 (e.g., son). The relation and relation detail can be selected from dropdown menus listing candidate relations and relation details or entered by the user. The user can complete the relationship creation by inputting a relationship creation complete command.

Once a new relationship is created on the relationship creation screen 350, the control unit 160 of the mobile terminal can control such that a reconfigured relationship diagram screen 360 having the relationship diagram reconfigured based on the linkage information. In more detail, if the relationship creation complete command is input, the control unit 160 checks the position of the newly added phonebook entry in the family tree on the basis of the linkage information such as the relationship information, relationship detail information, and addition information. Next, the control unit 160 places an object 365 representing the newly added phonebook entry at an appropriate position in the family tree as shown in the reconfigured relationship diagram screen 360.

Assuming that the group information of the linkage information indicates "family", the relationship information indicates "child", and the relationship detail information indicates "son", the control unit 160 controls such that the object 365 representing the newly added phonebook entry is placed between the objects 361 and 363 representing the phonebook entries of the user and user's wife, respectively, so as to define that the relationship of the newly added phonebook entry to the user and user's wife is "son".

The user can change the position of the object 365 representing the newly added phonebook entry on the reconfigured relationship diagram screen 360. For example, the user can move the object 365 by performing a touch (e.g., a drag touch event) to the object 365 on the touchscreen or key manipulation on the keypad of the input unit 120. If the movement of the object 365 is detected, the control unit 160 can change the relationship information and relationship detail information according to the new position of the object 365. For example, the relationship information can be changed from "child" to "nephew", and the relationship detail information from "son" to "male" according to the change of the position of the object 365.

After the relationship diagram is reconfigured completely as shown in the reconfigured relationship diagram screen 360, the user can input a reconfiguration complete command. If the reconfiguration complete command is input, the control unit 160 controls such that the phonebook entry screen 370 is displayed. At this time, the phonebook entry screen 370 is provided with the linkage information input by the user, i.e., the group field and relation field filled with the group information and relationship/relationship detail. As shown in the phonebook entry screen 370, the group field 371 is filled with the value "family", and the relation field 373 is filled with the value "child/son". Although not depicted in the phonebook entry screen 370, the phonebook entry screen 370 can be provided with the additional information entered on the relationship creation screen 350.

While the phonebook entry screen 370 is displayed, the user can finish the phonebook entry relationship configuration procedure or continue the phonebook entry relationship configuration procedure for setting other fields that are not filled yet on the phonebook entry configuration screen 310 (e.g., picture field and name field).

The description has been directed to the operations related to adding a new phonebook entry to a family tree in the exemplary embodiment of FIG. 3. The user can reconfigure the phonebook information, linkage information, and family tree as described above.

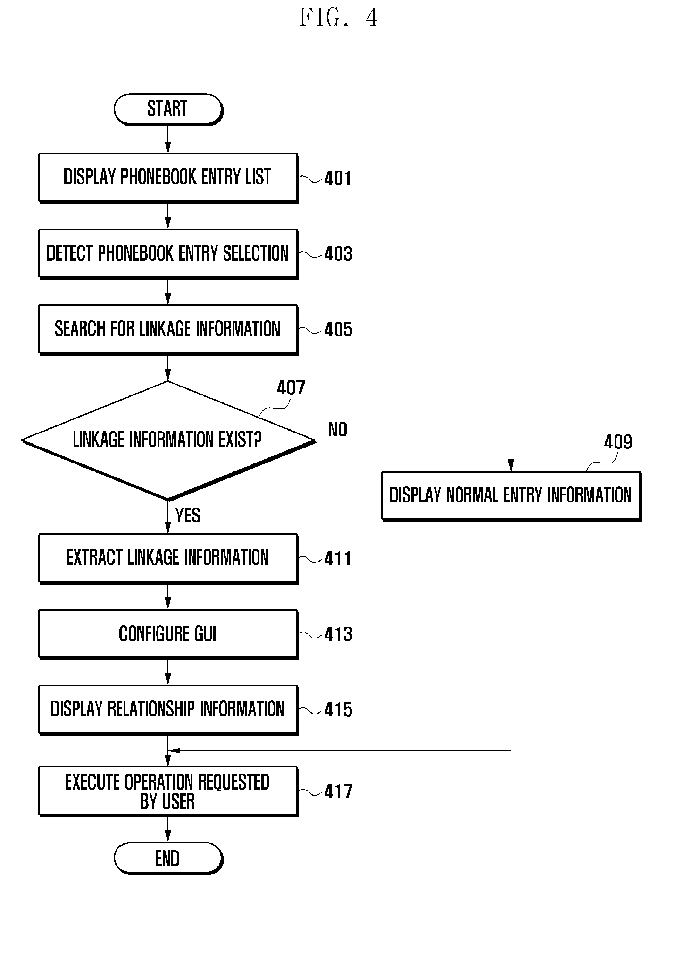

The configuration of the mobile terminal and the structure of the phonebook for user in the mobile terminal and the phonebook configuration procedure have been described above with reference to exemplary screen images. A description is made below of the method for providing the electronic phonebook in the above structured mobile terminal with reference to FIG. 4. The operations of the mobile terminal and phonebook provision method of the present invention is not limited to the following description, but can be implemented with various modifications in other exemplary embodiments.

FIG. 4 is a flowchart illustrating a method for providing a phonebook in a mobile terminal according to an exemplary embodiment of the present invention.

Referring to FIG. 4, the control unit 160 of the mobile terminal displays a phonebook list in response to a user request in step 401. Next, the control unit 160 monitors to detect a user input for selecting a phonebook entry from the phonebook list in step 403 and, if the selection input is detected, searches for the linkage information corresponding to the phonebook entry in step 405. Next, the control unit 160 determines whether the linkage information is retrieved in step 407.

If no linkage information is retrieved, the control unit 160, in step 409, controls such that a normal entry information screen is displayed as denoted by reference number 240 of FIG. 2. Next, the control unit 160 provides the user with the detailed information of the phonebook entry in the normal entry information screen and then controls an operation in response to a user request in step 417. While displaying the normal entry information screen, the control unit 160 controls such that a relationship configuration screen as described above with reference to FIG. 3 in response to a phonebook reconfiguration request. The control unit 160 can control to build a specific relationship diagram based on the linkage information on the relationship configuration screen.

Returning to step 407, if the linkage information corresponding to the phonebook entry is retrieved, the control unit 160 extracts the linkage information established in association with the phonebook entry in step 411. Next, the control unit 160 configures a GUI by referencing the linkage information in step 413. That is, as described above with reference to FIG. 2, the control unit 160 builds a relationship diagram. Next, in step 415, the control unit 160 controls such that a relationship information screen is displayed as denoted by reference number 230 of FIG. 2.

Finally, the control unit 160 controls to execute an operation requested by the user on the relationship information screen in step 417. For example, the control unit 160 can control such that the relationship information screen is replaced by the normal phonebook entry information screen in response to the user request. The control unit 160 also can control to display a configuration screen for reconfiguring the linkage information of the phonebook entry in response to the user request.

The control unit 160 also can trace a specific phonebook entry in the relationship diagram displayed on the relationship information screen and present the object representing the traced phonebook entry as distinct from other objects. For example, the object presenting the traced phonebook entry can be highlighted.

As described above, the phonebook provision method and apparatus of a mobile terminal according to exemplary embodiments of the present invention are capable of establishing a specific relationship among the phonebook entries sharing a common property and providing the user with the relationship information in the form of a relationship diagram. In this manner, the phonebook provision method and apparatus of exemplary embodiments of the present invention can provide the user with more useful information intuitively, resulting in an improvement of information accessibility and user's convenience.

Also, the phonebook provision method and apparatus of a mobile terminal according to exemplary embodiments of the present invention establishes relationships among the individual phonebook entries and displays the phonebook entries of a group to which the selected phonebook entry belongs in the form of a relationship diagram such that the user can acquire more intelligent information intuitively, resulting in deeper appreciation of the phonebook entries and improvement of user's convenience.

The above-described methods according to the present invention can be implemented in hardware or as software or computer code that can be stored in a recording medium such as a Compact Disc (CD) ROM, an RAM, a floppy disk, a hard disk, or a magneto-optical disk or downloaded over a network, so that the methods described herein can be rendered in such software using a general purpose computer, or a special processor or in programmable or dedicated hardware, such as an Application Specific Integrated Circuit (ASIC) or a Field Programmable Gate Array (FPGA). As would be understood in the art, the computer, the processor or the programmable hardware include memory components, e.g., a RAM, a ROM, a Flash memory, and the like, that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While the invention has been shown and described with reference to certain exemplary embodiments thereof, it will be understood by those skilled in the art that various changes in form and details may be made therein without departing from the spirit and scope of the invention as defined in the appended claims and their equivalents.

## Claims

1. A method for providing a phonebook in a mobile terminal, the method comprising:
displaying a phonebook entry list;
searching, if a phonebook entry is selected from the phonebook entry list, for linkage information representing a specific phonebook entry;
building a relationship diagram based on the linkage information; and
displaying the relationship diagram graphically.

2. The method of claim 1, wherein the linkage information comprises group information on a group to which the selected phonebook entry belongs and relationship information establishing a relationship of the selected phonebook entry to a user of the mobile terminal.

3. The method of claim 2, wherein the building of the relationship diagram comprises:
extracting one or more other phonebook entries belonging to the group to which the selected phonebook entry belongs; and
configuring the relationship diagram based on the linkage information and the one or more other phonebook entries.

4. The method of claim 3, wherein the extracting of the one or more other phonebook entries comprises retrieving the one or more other phonebook entries that are grouped based on the group information of the linkage information.

5. The method of claim 2, wherein the displaying of the relationship diagram comprises displaying an object representing the selected phonebook entry as distinct from objects representing the other phonebook entries.

6. The method of claim 5, wherein the displaying of the relationship diagram comprises:
tracing movement of the selected phonebook entry in the relationship diagram; and
highlighting the object representing the selected phonebook entry.

7. The method of claim 1, further comprising:
displaying, if a phonebook entry is selected from the phonebook entry list, a popup window; and
providing one of relative phonebook entry information and normal phonebook entry information according to an option selected on the popup window.

8. The method of claim 1, wherein the relationship diagram comprises one of a family tree and an organization chart.

9. A mobile terminal comprising:
a display unit for displaying at least one of a phonebook list of phonebook entries and a relationship diagram of a group of phonebook entries;
a storage unit for storing at least one phonebook entry and linkage information associated with the at least one phonebook entry; and
a control unit for building, if a phonebook entry is selected from the phonebook entry list, the relationship diagram based on the linkage information associated with the selected phonebook entry and for displaying the relationship diagram.

10. The mobile terminal of claim 9, wherein the linkage information comprises group information on a group to which the selected phonebook entry belongs and relationship information establishing a relationship of the selected phonebook entry to a user of the mobile terminal.

11. The mobile terminal of claim 9, wherein the control unit extracts one or more phonebook entries included in a group to which the selected phonebook entry belongs and configures the relationship diagram based on the linkage information and the extracted one or more phonebook entries.

12. The mobile terminal of claim 11, wherein the control unit controls, if a phonebook entry is selected from the phonebook list, to display a popup window and to display one of relative phonebook entry information and normal phonebook entry information according to an option selected on the popup window.

13. The mobile terminal of claim 11, wherein the relationship diagram comprises one of a family tree and an organization chart.

14. The mobile terminal of claim 11, wherein the control unit, when extracting the one or more phonebook entries, retrieves the one or more phonebook entries that are grouped based on the group information of the linkage information.

15. At least one processor readable recording medium for storing a computer program of instructions configured to be readable by at least one processor for instructing the at least one processor to execute a computer process for performing the method as recited in claim 1.
